# EUROPÄISCHE PATENTSCHRIFT

(11) **EP 0 499 711 B1**
(45) Veröffentlichungstag und Bekanntmachung des Hinweises auf die Patenterteilung: **16.08.1995**
(21) Anmeldenummer: 91121330.4
(22) Anmeldetag: 12.12.1991
(51) Int. Cl.: B60R 21/02

(54) **Aus einer abgepolsterten Blechhalbschale bestehender, plastisch verformbarer Knieaufprallkörper**
Energy absorbing knee impact element, consisting of an upholstered sheet metal semimonocoque
Elément de protection des genoux à deformation plastique composé d'une semi-monocoque de tôle capitonnée

(30) Priorität: 19.02.1991 DE 4105027
(43) Veröffentlichungstag der Anmeldung: 26.08.1992
(73) Patentinhaber: MERCEDES-BENZ AG, 70327 Stuttgart (DE)
(72) Erfinder: Wetzel, Guido, Dipl.-Ing., W-7030 Böblingen (DE); Müller, Manfred, W-7301 Deizisau (DE); Henseler, Wolfgang, W-7400 Tübingen (DE); Katz, Egon, Dipl.-Ing., W-7270 Nagold 7 (DE); Brambilla, Luigi, Dr.-Ing., W-7030 Böblingen (DE); Uphues, Hans-Wilhelm, Dipl.-Ing., W-7037 Magstadt (DE)

(56) Entgegenhaltungen:
- DE-A- 2 335 958
- DE-A- 3 112 036
- DE-A- 3 905 950
- DE-B- 2 338 026
- FR-A- 2 429 130
- US-A- 3 897 848

## Beschreibung

Die Erfindung betrifft einen aus einer abgepolsterten Blechhalbschale bestehenden, plastisch verformbaren Knieaufprallkörper.

Ein derartiger Knieaufprallkörper, der einem in Fahrzeugquerrichtung verlaufenden Hohlträger innenraumseitig zugeordnet und mit diesem verbunden ist, wobei der einen im wesentlichen gerundeten Profilverlauf aufweisende Knieaufprallkörper oberseitig in einen abgekanteten Befestigungsflansch ausläuft, der Befestigungselemente - vom Fahrgastraum aus frei zugänglich - aufnimmt, wobei die Blechhalbschale benachbart zum oberen Befestigungsflansch mit einer Einbuchtung versehen ist, die beim Knieaufprall eine nach oben gerichtete Bewegung des Knieaufprallkörpers unter Energieabsorption im Zuge eines Falt- und Abrollvorgangs unterstützt, ist durch die FR-A-2 429 130 bekannt. Die Einbuchtung ist als Schale ausgebildet, die sich mit Abstand von den beiden oberen Befestigungsstellen zwischen diesen erstreckt, so daß der vorbeschriebene Bewegungsablauf beim Knieaufprall nur im Bereich der Einbuchtung erfolgt, was bedingt, daß die Befestigungsstellen nicht abgedeckt werden und somit Verletzungen hervorrufen können.

Aufgabe der Erfindung ist es unter Beibehaltung einer montagefreundlichen oberseitigen Befestigung des Knieaufprallkörpers, diesen so auszubilden, daß beim Knieaufprall unter größtmöglicher Ausschöpfung seines Energieabsorptionsvermögens eine Verletzungsgefahr durch die oberseitigen Befestigungselemente ausgeschlossen wird.

Diese Aufgabe löst ein Knieaufprallkörper mit den Merkmalen des Patentanspruches.

Der Gegenstand der Erfindung wird nachfolgend anhand eines in der Zeichnung dargestellten Ausführungsbeispiels näher erläutert. Es zeigen:
- Fig. 1: einen vereinfachten Schnitt eines einem fahrzeugfesten Hohlträger vorgelagerten Knieaufprallkörpers im unverformten Zustand und
- Fig. 2: eine Darstellung nach Fig. 1 mit verformtem Knieaufprallkörper.

Einem fahrzeugfesten Hohlträger 1, der in nicht näher dargestellter Weise im Übergangsbereich des Fußraumes 2 zum Fahrgastraum 3 eines gleichfalls nicht gezeigten Kraftwagens angeordnet ist, ist ein Knieaufprallkörper 4 vorgelagert, der im wesentlichen aus einer ein gerundetes Profil aufweisenden Blechhalbschale 5 besteht, die außenseitig zumindest bereichsweise mit einer Polsterschicht 6 versehen ist.

Neben unterseitigen, nicht näher dargestellten Befestigungselementen 7, von denen nur eines angedeutet ist, sind auch oberseitige Befestigungselemente 8 vorhanden, von denen gleichfalls nur eines ersichtlich ist. Über diese Befestigungselemente 7 und 8, die frei zugänglich sind, erfolgt eine lösbare Verbindung mit dem Hohlträger 1, wobei als obere Befestigungsbasis die Blechhalbschale 5 einen abgekanteten Befestigungsflansch 9 aufweist.

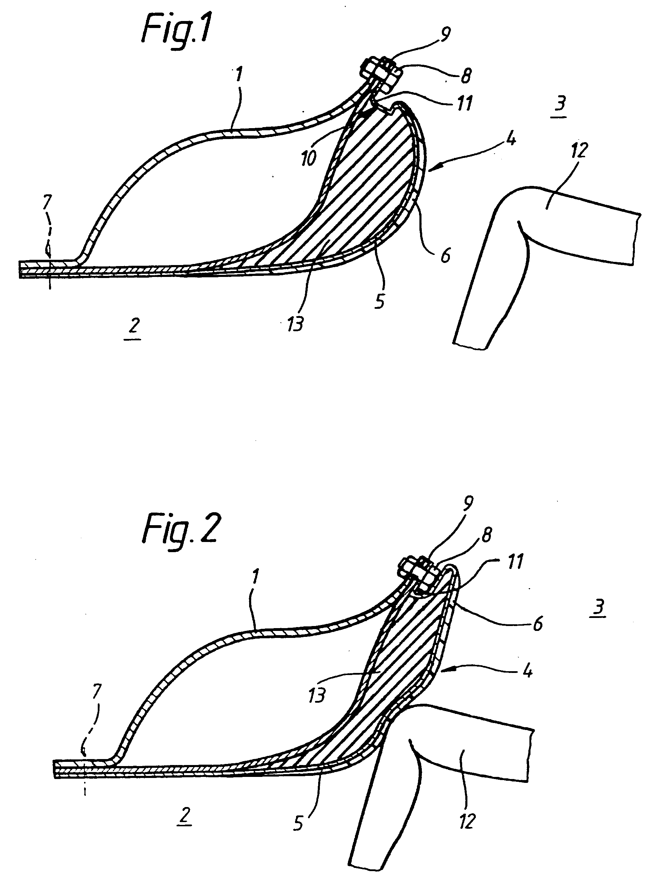

An den Befestigungsflansch 9 schließt sich zum gerundeten Bereich der Blechhalbschale 5 hin eine einwärts gerichtete, angeformte Stufe 10 an, die befestigungsflanschseitig mit einer Falzkante 11 versehen ist. Beim Aufprall der angedeuteten Knie 12 eines Fahrzeuginsassen wird die Blechhalbschale 5 unter Energiesaborption deformiert, wobei die Polsterschicht 6 den Aufprall mildert und der die Blechhalbschale 5 ausfüllende, aus Schaumstoff bestehende Energieabsorptionskörper 13 die Energieaufnahmefähigkeit erhöht. Bei diesem Vorgang erfolgt - wie Fig. 2 zeigt - auch ein Abrollen des Knieaufprallkörpers 4 um die gerundete Falzkante 11, wobei die Stufe 10 gestreckt und die Befestigungselemente 8 durch den kraftmäßig beaufschlagten oberen Bereich des Knieaufprallkörpers 4 überdeckt werden, so daß auch bei gegenüber der Darstellung angehobener Sitzposition keine Gefahr besteht, daß ein Kniekontakt mit Befestigungselementen 8 erfolgt. Dieser Abrollvorgang mit Streckung der Stufe 10 geht mit einer Energieabsorption einher, so daß eine weitere Erhöhung des Energieabsorptionsvermögens erreicht wird.

## Patentansprüche

1. Aus einer abgepolsterten Blechhalbschale (5) bestehender, plastisch verformbarer Knieaufprallkörper (4), der einem in Fahrzeugquerrichtung verlaufenden Hohlträger (1) innenraumseitig vorgelagert und mit diesem verbunden ist, wobei der ein gerundetes Profil aufweisende Knieaufprallkörper (4) oberseitig in einen abgekanteten Befestigungsflansch (9) ausläuft, der Befestigungselemente (8) - vom Fahrzeuginnenraum aus frei zugänglich - aufnimmt, wobei im Übergangsbereich des oberen Befestigungsflansches (9) zum gerundeten Profilabschnitt der Blechhalbschale (5) hin eine einwärts gerichtete, sich unmittelbar an den Befestigungsflansch (9) anschließende Stufe (10) angeformt ist, um deren flanschnahe gerundete Falzkante (11) sich der Knieaufprallkörper (4) beim Knieaufprall unter Energieabsorption und Streckung der Stufe (10) bei gleichzeitiger Überdeckung von den oberen Befestigungselementen (8) abrollt.

## Claims

1. A plastically deformable knee impact body (4) consisting of an upholstered sheet metal halfshell (5) which is mounted on the passenger compartment side in front of a hollow carrier (1) extending in the transverse direction of the vehicle and is connected to said carrier, the knee impact body (4), having a rounded profile, ending at the top in a bevelled attachment flange (9) which receives attachment elements (8) which are freely accessible from the passenger compartment of the vehicle, an inwardly directed step (10), directly adjoining the attachment flange (9), being formed on in the junction area of the upper attachment flange (9) towards the rounded profile section of the sheet metal halfshell (5), the knee impact body (4) rolling around the rounded folding edge (11), near to the flange, of said step in the event of a knee impact with energy absorption and stretching of the step (10) and with the upper attachment elements (8) being simultaneously covered.

## Revendications

1. Elément de protection anti-chocs (4) des genoux, déformable plastiquement et se composant d'une demi-coque (5) en tôle avec rembourrage, qui est installé du côté habitacle sur un support creux (1), orienté dans la direction transversale du véhicule, et qui est fixé sur ce support, où l'élément de protection antichocs de genoux (4) ayant un profit arrondi se termine en haut par une bordure de fixation (9) pliée, recevant des organes de fixation (8) - librement accessibles de l'intérieur du véhicule -, et où il est formé dans la zone de transition entre la bordure supérieure de fixation (9) et la partie de profit arrondi de la demi-coque en tôle (5), un redent (10) orienté vers l'intérieur, se raccordant directement à la bordure de fixation et autour du bord de pliage, duquel arrondi, proche de la bordure de fixation, l'élément de protection anti-chocs de genoux (4) se déploie lors du choc avec les genoux, avec absorption d'énergie et allongement du redent et avec recouvrement simultané des organes supérieurs de fixation (8).
